# EUROPEAN PATENT APPLICATION

(11) **EP 3 460 740 A1**
(43) Date of publication of application: **27.03.2019**
(21) Application number: 17790662.5
(22) Date of filing: 15.02.2017
(51) Int. Cl.: G06Q 40/08

(54) **DATA VERIFICATION-BASED REMINDER METHOD, DEVICE, AND TERMINAL, AND STORAGE MEDIUM**

(30) Priority: 15.12.2016 CN 201611158961
(71) Applicant: Ping An Technology (Shenzhen) Co., Ltd., Shenzhen, Guangdong 518000 (CN)
(72) Inventor: DING, Jie, Shenzhen Guangdong 518000 (CN); CAI, Ning, Shenzhen Guangdong 518000 (CN); FENG, Yuyang, Shenzhen Guangdong 518000 (CN); LING, Jian, Shenzhen Guangdong 518000 (CN); JIANG, Yunpeng, Shenzhen Guangdong 518000 (CN)
(74) Representative: dompatent von Kreisler Selting Werner - Partnerschaft von Patent- und Rechtsanwälten mbB
(86) International application number: PCT/CN2017/073545
(87) International publication number: WO 2018/107576

(57) **Abstract**

A method, device, terminal and storage medium for data verification is disclosed. The method includes: obtaining package information to be verified and a corresponding definer of the package information; calculating a deviation degree of the package information according to a predetermined matching algorithm based on an operation authority and a historical definition data of the definer, the deviation degree reflects an accuracy of the package information defined by the definer; outputting a prompt message to prompt the definer to verify the package information if the deviation degree is greater than a preset deviation standard value, so that a preliminary verification to the package information newly defined by the salesman is realized; the salesman is further prompted to check the package information according to the verification results, thereby effectively reducing the error rate of package information and the impact of incorrect definer on sales amount.

## Description

### TECHNICAL FIELD

The present application pertains to the field of the computer technology, and more particularly to a method, device, terminal and storage medium for data verification.

### BACKGROUND

In the insurance industry, with the vigorous development of personal business, salesmen often need to define different insurance packages providing to different sale organizations and different sale channels for sale. Here, the sale organizations refer to the branch companies divided according to the administrative division by the insurance company, including primary institutions (head office), secondary institutions (provincial branch), tertiary institutions (municipal branch), such as the Heilongjiang branch office, which also includes a plurality of tertiary institutions like Harbin, Daqing, Qiqihar, Jixi, Jiamusi, Mudanjiang, Suihua branch and so on; the sale channels refer to the sales method of insurance, such as direct sales, individual comprehensive development, key customers, silver extension, intermediary, and so on.

However, due to the huge number of sale organizations and sale channels, the salesmen prone to make mistake when defining an insurance package, which could not be noticed in time. Defining an insurance package incorrectly or inaccurately will affect sales time and customer experience, even affect sales when serious.

### SUMMARY

In view of this, embodiments of the present application provide a method, device, terminal, and storage medium for data verification to verify and prompt for newly defined package information.

In a first aspect, a method for data verification is provided, wherein the method includes:
obtaining package information to be verified and a corresponding definer of the package information;
calculating a deviation degree of the package information according to a predetermined matching algorithm based on an operation authority and a historical definition data of the definer, the deviation degree reflects an accuracy of the package information defined by the definer;
outputting a prompt message to prompt the definer to verify the package information if the deviation degree is greater than a preset deviation standard value.

Further, the calculating a deviation degree of the package information according to a predetermined matching algorithm based on an operation authority and a historical definition data of the definer includes:
obtaining an error coefficient α of the definer;
obtaining a sale organization and a sale channel corresponding to the package information;
determining a definition authority value A of the sale organization defined by the definer according to the operation authority of the definer;
determining a definer reference value B of the sale organization defined by the definer and a definer reference value C of the sale channel defined by the definer based on the historical definition data of the definer; and
substituting the error coefficient α, the definition authority value A, the of the sale organization defined by the definer and the definer reference value C of the sale channel defined by the definer into a predetermined deviation degree calculation formula, and obtaining a deviation degree β of the package information;
wherein, the deviation degree calculation formula is: β = (A + B + C) * α.

Further, the obtaining an error coefficient α of the definer includes:
counting a number of a historical definer time and a number of package information changing time, calculating a ratio between the number of a changing time and the number of a historical definer time;
determining the error coefficient α according to the ratio;
wherein the larger the ratio is, the greater the error coefficient α is.

Further, the determining a definition authority value A of the sale organization defined by the definer according to the operation authority of the definer includes:
estimating whether the definer can define the sale organization or not according to the operation authority of the definer; and
determining a definition authority value A of the sale organization defined by the definer based on the estimating result.

Further, the determining a definer reference value B of the sale organization defined by the definer and a definer reference value C of the sale channel defined by the definer based on the historical definition data of the definer includes:
acquiring a definition data of the sale organization defined by the definer based on the historical definition data of the definer;
determining a definer reference value B of the sale organization defined by the definer based on the definition data of the sale organization defined by the definer; and
acquiring a definition data of the sale channel defined by the definer based on the historical definition data of the definer; and
determining a definer reference value C of the sale channel defined by the definer based on the definition data of the sale channel defined by the definer.

In a second aspect, a device for data verification is provided, wherein the device includes:
an obtaining module configured for obtaining package information to be verified and a corresponding definer of the package information;
a calculating module, used for calculating a deviation degree of the package information according to a predetermined matching algorithm based on an operation authority and a historical definition data of the definer, the deviation degree reflects an accuracy of the package information defined by the definer;
a prompting module configured for outputting a prompt message to prompt the definer to verify the package information if the deviation degree is greater than a preset deviation standard value.

Further, the calculating module includes:
a first obtaining unit configured for obtaining an error coefficient α of the definer;
a second obtaining unit configured for obtaining a sale organization and a sale channel corresponding to the package information;
a first processing unit configured for determining a definition authority value A of the sale organization defined by the definer according to the operation authority of the definer;
a second processing unit configured for determining a definer reference value B of the sale organization defined by the definer and a definer reference value C of the sale channel defined by the definer based on the historical definition data of the definer; and
a calculating unit configured for substituting the error coefficient α, the definition authority value A, the of the sale organization defined by the definer and the definer reference value C of the sale channel defined by the definer into a predetermined deviation degree calculation formula, and obtaining a deviation degree β of the package information;
wherein, the deviation degree calculation formula is: β = (A + B + C) * α.

Further, the first obtaining unit is particularly configured for:
counting the number of a historical definer time and the number of package information changing time, calculating a ratio of the number of a changing time to the number of a historical definer time; determining the error coefficient α according to the ratio;
wherein the larger the ratio is, the greater the error coefficient α is.

Further, the first processing unit is configured for:
estimating whether the definer can define the sale organization or not according to the operation authority of the definer; determining a definition authority value A of the sale organization defined by the definer based on the estimating result.

Further, the second processing unit is particularly configured for:
acquiring definition data of the sale organization defined by the definer based on the historical definition data of the definer;
determining a definer reference value B of the sale organization defined by the definer based on the definition data of the sale organization defined by the definer; and
acquiring a definition data of the sale channel defined by the definer based on the historical definition data of the definer;
determining a definer reference value C of the sale channel defined by the definer based on the definition data of the sale channel defined by the definer.

In a third aspect, a terminal is provided, wherein the terminal includes a processor, a memory, an input device, and an output device;
the input device is configured for enabling a user to input the package information to be verified, obtaining package information to be verified, and a corresponding definer of the package information;
the memory is configured for storing program codes;
the processor is configured for executing the program codes stored in the memory to perform the following operations:
obtaining package information to be verified and a corresponding definer of the package information;
calculating a deviation degree of the package information according to a predetermined matching algorithm based on an operation authority and a historical definition data of the definer, the deviation degree reflecting the accuracy of the package information defined by the definer;
outputting a prompt message to prompt the definer to verify the package information if the deviation degree is greater than a preset deviation standard value;
the output device is configured for outputting the prompt information.

In a fourth aspect, a non-transient computer-readable storage medium is provided, wherein the non-transient computer-readable storage medium is configured for storing instructions executable by one or more processors to perform operations, and the operations includes:
obtaining package information to be verified and a corresponding definer of the package information;
calculating a deviation degree of the package information according to a predetermined matching algorithm based on an operation authority and a historical definition data of the definer, the deviation degree reflecting the accuracy of the package information defined by the definer;
outputting a prompt message to prompt the definer to verify the package information if the deviation degree is greater than a preset deviation standard value.

Compared to the prior art, the embodiments of the application obtains package information to be verified and a corresponding definer of the package information, and calculates a deviation degree of the package information according to a predetermined matching algorithm based on an operation authority and a historical definition data of the definer, so that the accuracy of the package information defined by the definer is obtained; outputting a prompt message to prompt the definer to verify the package information if the deviation degree is greater than a preset deviation standard value. In this way, it is realized that the package information newly defined by the salesman is preliminarily verified, and the salesman is prompted to check the package information according to the verification results, thereby effectively reducing the error rate of package information and the impact of incorrect definer on sales amount.

### BRIEF DESCRIPTION OF THE DRAWINGS

In order to illustrate the technical solution in the embodiments of the present application more clearly, the drawings to be used in the embodiments or in the prior art will be briefly described below, apparently, the drawings in the following description are merely embodiments of the present application, and other drawings could be obtained based on these drawings by those skilled in the art without paying any creative work.
Figure 1 is an implementation flowchart of a method for data verification provided in a first embodiment of the present application;
Figure 2 is an implementation flowchart of a step S102 in the method for data verification provided by the first embodiment of the present application;
Figure 3 is an implementation flowchart of determining a definition authority value A of the sale organization defined by the definer according to the operation authority of the definer provided by the first embodiment of the present application;
Figure 4 is an implementation flowchart of a step S103 in the method for data verification provided by the first embodiment of the present application;
Figure 5 is a structural block diagram of a device for a data verification provided by a second embodiment of the present application;
Figure 6 is a schematic block diagram of a terminal provided by a third embodiment of the present application.

### DETAILED DESCRIPTION OF THE EMBODIMENTS

In order to make the purposes, technical solutions, and advantages of the present application be clear, the present application will be further described in detail hereinafter with reference to accompanying drawings and embodiments. It should be understood that the specific embodiments described herein are merely intended to explain but not to limit the present application.

The embodiments of the application obtaining package information to be verified and a corresponding definer of the package information; and then calculating a deviation degree of the package information according to a predetermined matching algorithm based on an operation authority and a historical definition data of the definer, so that the accuracy of the package information defined by the definer is obtained; outputting a prompt message to prompt the definer to verify the package information if the deviation degree is greater than a preset deviation standard value, so that the package information newly defined by the salesman could be verified effectively, and prompts the salesman to check the package information according to the verification results, effectively reduces the error rate of package information and the impact of incorrect definer on sales volume. The embodiments of the application further provide a corresponding device, which will be described in detail below.

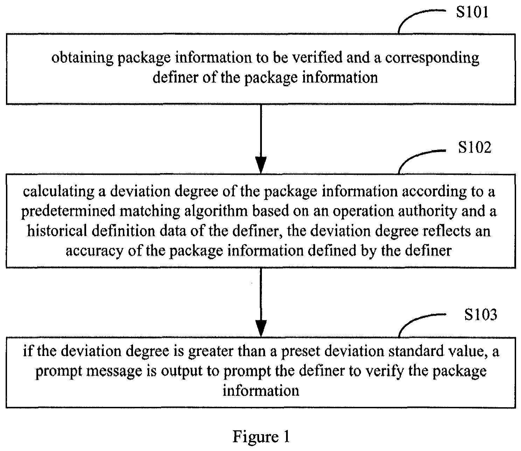

Figure 1 is an implementation flowchart of a method of data verification provided in a first embodiment of the present application.

In an embodiment of the present application, the method of data verification is applied to a terminal, to determine whether the definer has authority to define the package information and the accuracy of the definer of the package information, and to prompt the definer to perform a verification operation. The terminal includes but is not limited to computer, server, and the like.

Referring to Figure 1, the data verification method includes:
In a step S101, obtaining package information to be verified and a corresponding definer of the package information.

Here, the package information refers to insurance packages, such as pension insurance packages, accident insurance packages, major disease insurance packages and so on. The definer is the salesman in an insurance company. The terminal obtains package information to be verified and a corresponding definer of the package information after the insurance salesman completing a definer of package information and submitting it.

In a step S102, calculating a deviation degree of the package information according to a predetermined matching algorithm based on an operation authority and a historical definition data of the definer, the deviation degree reflects an accuracy of the package information defined by the definer.

In an embodiment of the present application, predefine the authorities for operating specified sales organization to different definers. Thus, the operation authority refers to the sales organizations which can be operated by the definers. For example, as described above, when the definer is a salesman in an insurance company, predefine the authority for operating Beijing branch office to the salesman in Beijing branch office, but the salesman in Beijing branch office could not operate other branch offices; for example, predefine the authority for operating Guangzhou branch office to the salesman in Beijing branch office, but the salesman in Guangzhou branch office could not operate other branch offices.

The historical definition data is a sales organization and/or a sales channel that is normally defined by the definer, which reflects the accuracy of the definer of a sales organization or channel defined by a definer to some extent. Thus, the embodiment of the present application preferably calculates a deviation degree of the package information based on an operation authority and a historical definition data of the definer. The deviation degree is the degree of deviation of the package information defined by the definer, reflecting the accuracy of the package information defined by the definer, and is used as a basis for estimating whether the definer verifies the package information or not.

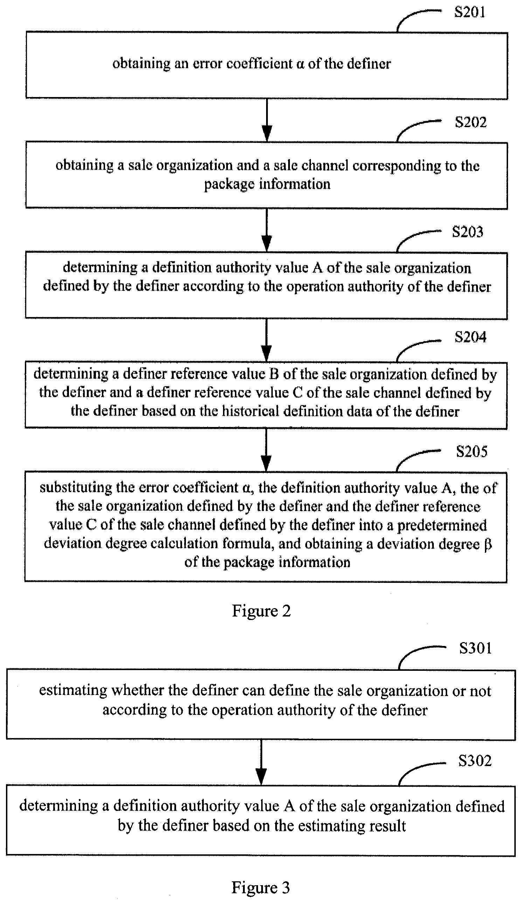

As a preferred example of the present application, Figure 2 shows an implementation flowchart of the step S102 in the method for data verification provided by the first embodiment of the present application.

Referring to Figure 2, the step S102 includes:
In a step S201, the error coefficient α of the definition is acquired.

Here, the error coefficient α refers to the error probability when the definer defines package information. Alternatively, the embodiment of the present application calculates the error coefficient α by the number of modifications of the package information by the definer. In the embodiment of the present application, the sub-step S201 includes:
counting the number of a historical definer time and the number of package information changing time, and calculating a ratio of the number of a changing time to the number of a historical definer time; and
determining the error coefficient α according to the ratio.

Exemplarily, assuming that according to statistics, a definer N defined 10 package information in total, and the number of definition is 15, it is possible to know that the modification number of the package information by the definer N is 5, the ratio between the modification number and the defined number is 5/15, the error coefficient α is then determined according to the ratio 5/15. Wherein the error coefficient α is in the range of [0-10], the larger the ratio is, the larger the error coefficient α is, the smaller the ratio is, and the smaller the error coefficient α is. The larger the error coefficient α is, the greater the probability that the definer defines the package information is. The smaller the error coefficient α is, the lower the probability that the definer defines the package information is.

In a step S202, obtaining a sale organization and a sale channel corresponding to the package information.

In a step S203, determining a definition authority value A of the sale organization defined by the definer according to the operation authority of the definer.

Here, the definition authority value A is an authority reference used by a definer to define the current package information. The embodiment of the present application determines whether or not the definer can define a sales organization corresponding to the package information based on the operation authority of the definer, and determines the definition authority value A accordingly. Figure 3 shows an implementation flowchart of determining a definition authority value A of the sale organization defined by the definition according to the operation authority of the definition provided by the first embodiment of the present application, referring to FIG 3, the implementation flowchart includes:
In a step S301, estimating whether the definer can define the sale organization or not according to the operation authority of the definer;
In a step S302, determining a definition authority value A of the sale organization defined by the definer based on the estimating result.

The range of the definition authority value A is [0-1]. The number of the definition authority value A can be preset according to the specific definer, the specific sales organization, and the estimating result, that is, the number of the definition authority value A of different definers to different sales organizations can be set in advance.

Illustratively, it is assumed that salesman M in Beijing branch office only has an operational authority to the sales organization in Beijing, and the salesman M defines the definition authority value A of Beijing sales organization to be 0, and defines the definition authority value A of other sales organization is 0.3. In some specific embodiments, if it is determined in step S301 that the salesman M cannot define the currently defined Guangzhou sales organization, then the definition authority value A of the salesman M for the sales organization is determined to be 0.3; otherwise, in other specific embodiments, if it is determined in step S301 that the salesman M can define the currently defined Beijing sales organization, then the definition authority value A of the salesman M for the sales organization is determined to be 0. It should be noted that the above values 0 and 0.3 are used only to interpret the step S302 and are not intended to limit the application; in other embodiments, they could be other values.

In a step S204, determining a definer reference value B of the sale organization defined by the definer and a definer reference value C of the sale channel defined by the definer based on the historical definition data of the definer.

Here, the historical definition reference value reflects whether the definer has previously defined the sales organization or the sales channel or not.

As a preferred example of the present application, a specific implementation flow of the step S204 provided by the embodiment of the present application is detailed below, wherein the implementation flow includes:
acquiring a definition data of the sale organization defined by the definer based on the historical definition data of the definer;
determining a definer reference value B of the sale organization defined by the definer based on the definition data of the sale organization defined by the definer; and
acquiring a definition data of the sale channel defined by the definer based on the historical definition data of the definer; and
determining a definer reference value C of the sale channel defined by the definer based on the definition data of the sale channel defined by the definer.

Alternatively, the definition data of the sales organization defined by the definer includes, but is not limited to, whether the definer has previously defined the sales organization or not, the number of definition times, the time interval and so on; the definition data of the sales channel defined by the definer includes, but is not limited to, whether the definition has previously defined the sales channel or not, the number of definition times, the time interval and so on.

Exemplarily, in the case whether the sales organization and the sales channel are defined or not, first estimates whether or not the definer has previously defined the sales organization based on the definition data of the definer. If the definer has previously defined the sales organization, the historical definition reference value B of the sales organization is 0, if the definer has not previously defined the sales organization, the historical definition reference value B of the sales organization is 0.1. And then estimates whether the definer has previously defined the sales channel based on the definition data of the definer. If the definer has previously defined the sales channel, the historical definition reference value C of the sales channel is zero. If the definer has not previously defined the sales organization, the historical definition reference value C of the sales channel is 0.1. It should be noted that the above values 0 and 0.1 are used only to explain how the historical definition reference value B and the history definition reference value C are determined based on whether or not the sales organization and the sales channel are defined, and are not intended to limit the present application. In some embodiments, other values could also be used as well.

In a step S205, substitutes the error coefficient α, the definition authority value A, the of the sale organization defined by the definer and the definer reference value C of the sale channel defined by the definer into a predetermined deviation degree calculation formula, and obtains a deviation degree β of the package information.

In the embodiment of the present application, the deviation degree calculation formula is: β = (A + B + C) * α. Wherein each symbol is defined as described above, and is not described here, "*" denotes a multiplication operation.

In a step S103, outputting a prompt message to prompt the definer to verify the package information if the deviation degree is greater than a preset deviation standard value.

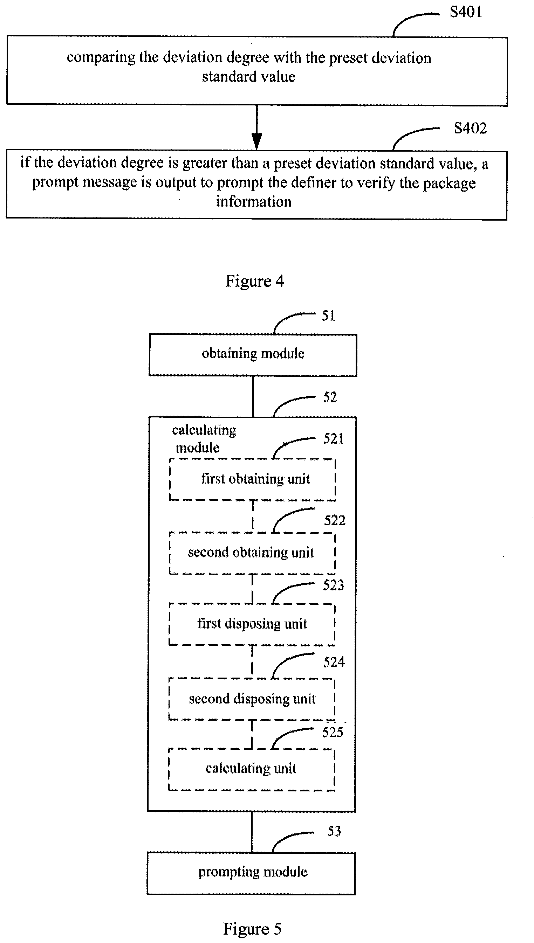

Here, the embodiment of the present application presets a deviation standard value, the deviation standard value is a criterion for whether operating a prompt or not. Wherein, the range of the deviation standard value is [0, 1], 0 reflects the absence of a deviation, 1 reflects a significant deviation, the magnitude of the deviation standard value can be adjusted according to the actual demand. After obtaining the deviation degree of the package information currently defined by the definer, the present application determines whether prompting the definer to verify the package information or not by comparing the deviation degree with the deviation standard value. For example, Figure 4 shows an implementation flow of the step S103 in the method provided by the embodiment of the present application. Referring to Figure 4, the step S103 includes:

In a step S401, comparing the deviation degree with the preset deviation standard value.

In a step S402, outputting a prompt message to prompt the definer to verify the package information if the deviation degree is greater than a preset deviation standard value.

Here, when the deviation degree of the package information is greater than the deviation standard value, a prompt operation is performed. In some embodiments of the present application, the prompt could include a text image prompt, for example, a prompt could be displayed by the display screen of the terminal to alert the user verifying the package information. For example, the word can be "You do not have the authority to define the *** of the sales organization, please verify the data" or "You have not previously defined the package information for this sales channel, please verify your data". In other embodiments, a voice prompt could also be included, for example, it is possible to output a prompt voice by the audio output device of the mobile terminal to alert the user verifying package information. Illustratively, the prompt could be "You do not have defined permissions for the *** of the sales organization, please verify the data" or "You have not previously defined the package information for this sales channel, please verify your data".

In summary, the embodiments of the application obtaining package information to be verified and a corresponding definition of the package information; calculating a deviation degree of the package information according to a predetermined matching algorithm based on an operation authority and a historical definition data of the definition, so that the accuracy of the package information defined by the definition is obtained; if the deviation degree is greater than a preset deviation standard value, a prompt message is output to prompt the definition to verify the package information, so that the package information newly defined by the salesman could be verified effectively, and prompts the salesman to check the package information according to the verification results, effectively reduces the error rate of package information and the impact of incorrect definition on sales volume.

It should be understood that in the embodiments of the present application, the sizes of the sequence number of the above procedures do not reflect the execution order, the execution order of each process should be determined by its function and intrinsic logic, which should not be construed as limiting the implementation of embodiments of the present application.

It should be noted that, it will be understood by those of ordinary skill in the art that the implementation of all or parts of the steps of the above embodiments could be accomplished by hardware, and also could be completed by using a program to instruct the associated hardware, the described program could be stored in a computer-readable storage medium, which could be a read-only memory, a magnetic disk, an optical disk, or the like.

Figure 5 is a block diagram of a device for data verification provided by a second embodiment of the present application, for the convenience of explanation, only portions related to the embodiments of the present application are shown.

In the embodiment of the present application, the device for data verification is used to implement the method for data verification described in any of the embodiments of Figs. 1 to 4, which could be a software unit, a hardware unit or a combination unit of a hardware and software which could built in the terminal. The terminal includes, but is not limited to, computer, server, and the like.

Referring to Figure 5, the data verification device includes:
an obtaining module 51 configured for obtaining package information to be verified and a corresponding definition of the package information;
a calculating module 52 configured for calculating a deviation degree of the package information according to a predetermined matching algorithm based on an operation authority and a historical definition data of the definition, the deviation degree reflecting the accuracy of the package information defined by the definition; and
a prompting module 53 configured for outputting a prompt message to prompt the definition to verify the package information if the deviation degree is greater than a preset deviation standard value.

Here, the definer is a salesman in an insurance company. The operation authority refers to which sales organizations the definer can operate on. Different definers in the embodiments of the present application are given the authority to operate the designated sales organization. The historical definition data is a sales organization and/or a sales channel that is normally defined by the definer. Wherein the deviation degree is the degree of deviation of the package information defined by the definer, and reflects the accuracy of the package information defined by the definer, and is used as a basis for estimating whether prompting the definer to verify the package information or not. As a preferred example of the present application, the computing module 52 could include:
a first obtaining unit 521 configured for obtaining an error coefficient α of the definer;
a second obtaining unit 522 configured for obtaining a sale organization and a sale channel corresponding to the package information;
a first processing unit 523 configured for determining a definition authority value A of the sale organization defined by the definer according to the operation authority of the definer;
a second processing unit 524 configured for determining a definer reference value B of the sale organization defined by the definer and a definer reference value C of the sale channel defined by the definer based on the historical definition data of the definer; and
a calculating unit 525 configured for substituting the error coefficient α, the definition authority value A, the of the sale organization defined by the definer and the definer reference value C of the sale channel defined by the definer into a predetermined deviation degree calculation formula, and obtaining a deviation degree β of the package information;
wherein the deviation degree calculation formula is: β = (A + B + C) * α.

Here, the error coefficient α refers to the error probability when the definer defines package information. Alternatively, the embodiment of the present application calculates the error coefficient α by the number of modifications of the package information by the definer. The first obtaining unit 521 is configured for:
counting the number of a historical definer time and the number of package information changing time, and calculating a ratio of the number of a changing time to the number of a historical definer time; and determining the error coefficient α according to the ratio;
wherein the larger the ratio is, the greater the error coefficient α is.

Here, the definition authority value A is an authority reference used by a definer to define the current package information. The embodiment of the present application determines whether or not the definer can define a sales organization corresponding to the package information based on the operation authority of the definer, and determines the definition authority value A accordingly. The first processing unit 523 is particularly used for:

estimating whether the definer can define the sale organization or not according to the operation authority of the definer; and determining a definition authority value A of the sale organization defined by the definer based on the estimating result.

The range of the definition authority value A is [0-1]. The number of the definition authority value A can be preset according to the specific definer, the specific sales organization, and the estimating result, that is, the number of the definition authority value A of different definers to different sales organizations can be set in advance.

Alternatively, the second processing unit 524 is particularly used for:
acquiring a definition data of the sale organization defined by the definer based on the historical definition data of the definer;
determining a definer reference value B of the sale organization defined by the definer based on the definition data of the sale organization defined by the definer; and
acquiring a definition data of the sale channel defined by the definer based on the historical definition data of the definer; and
determining a definer reference value C of the sale channel defined by the definer based on the definition data of the sale channel defined by the definer.

Here, the historical definition reference value B reflects whether the definer has previously defined the sales organization or the sales channel or not.

Alternatively, the prompting module 53 further includes:
a comparing unit configured for comparing the deviation degree with the preset deviation standard value;
a prompting unit configured for outputting a prompt message prompt the definer to verify the package information if the deviation degree is greater than a preset deviation standard value.

Here, the embodiment of the present application presets a deviation standard value, the deviation standard value is a criterion for whether operating a prompt or not. Wherein, the range of the deviation standard value is [0, 1], 0 reflects the absence of a deviation, 1 reflects a significant deviation, the magnitude of the deviation standard value can be adjusted according to the actual demand. After obtaining the deviation degree of the package information currently defined by the definer, the present application determines whether prompting the definer to verify the package information or not by comparing the deviation degree with the deviation standard value. When the deviation degree of the package information is greater than the deviation standard value, a prompt operation is performed. In some embodiments of the present application, the prompt could include a text image prompt, for example, a prompt could be displayed by the display screen of the terminal to alert the user verifying the package information. For example, the word can be "You do not have the authority to define the *** of the sales organization, please verify the data" or "You have not previously defined the package information for this sales channel, please verify your data". In other embodiments, a voice prompt could also be included, for example, it is possible to output a prompt voice by the audio output device of the mobile terminal to alert the user verifying package information. Illustratively, the prompt could be "You do not have defined permissions for the *** of the sales organization, please verify the data" or "You have not previously defined the package information for this sales channel, please verify your data".

It should be noted that, the apparatus in the embodiment of the present application can be used to implement the entire technical solution in the above-described method embodiment, the function of each functional modules could be embodied in accordance with the method of the method embodiment described above, the specific implementation process can refer to the above example of the relevant description, and not repeat here.

It should be noted that, in the hardware implementation, the above acquisition module 51, the calculation module 52 and the presentation module 53 could be embedded or independent of in a terminal in the form of a hardware, and could be stored in the terminal in the form of software, so that the processor could perform the operations corresponding to the above modules. The processor could be a central processing unit (CPU), a microprocessor, a microcontroller, or the like.

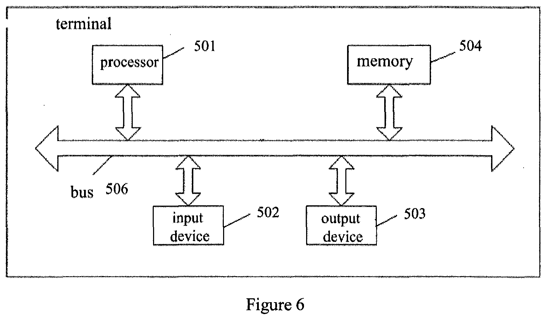

In order to implement the above-described method embodiments in the embodiments of the present application preferably, the present application also provides a related terminal for cooperating with the implementation of the embodiments of the method described above. Figure 6 shows a schematic block diagram of a terminal provided by a third embodiment of the present application. The terminal includes: one or more processors 501 (only one is shown in the figure), one or more input devices 502 (only one is shown in the figure), one or more output devices 503 (only one is shown in the figure), and a memory 504. The processor 501, the input device 502, the output device 503, and the memory 504 are connected via a bus 506. The input device 502 is used for enabling a user to input package information to be verified, and obtaining the package information to be verified and a corresponding definer of the package information; the memory 504 is used for storing program codes; and the processor 501 is used for executing program codes stored in the memory to perform the following operations:
obtaining package information to be verified and a corresponding definer of the package information;
calculating a deviation degree of the package information according to a predetermined matching algorithm based on an operation authority and a historical definition data of the definer, the deviation degree reflecting the accuracy of the package information defined by the definer;
outputting a prompt message to prompt the definer to verify the package information if the deviation degree is greater than a preset deviation standard value.

The output device 503 is used for outputting the prompt information.

Alternatively, using the processor 501 to calculate a deviation degree of the package information according to a predetermined matching algorithm based on an operation authority and a historical definition data of the definer includes:
obtaining an error coefficient α of the definer;
obtaining a sale organization and a sale channel corresponding to the package information;
determining a definition authority value A of the sale organization defined by the definer according to the operation authority of the definer;
determining a definer reference value B of the sale organization defined by the definer and a definer reference value C of the sale channel defined by the definer based on the historical definition data of the definer; and
substituting the error coefficient α, the definition authority value A, the of the sale organization defined by the definer and the definer reference value C of the sale channel defined by the definer into a predetermined deviation degree calculation formula, and obtaining a deviation degree β of the package information;
wherein the deviation degree calculation formula is: β = (A + B + C) * α.

Alternatively, using the processor 501 to obtain an error coefficient α of the definer includes:
counting the number of a historical definer time and the number of package information changing time, and calculating a ratio of the number of changing time to the number of a historical definer time; and
determining the error coefficient α according to the ratio;
wherein the larger the ratio is, the greater the error coefficient α is.

Alternatively, using the processor 501 to determine a definition authority value A of the sale organization defined by the definer according to the operation authority of the definer includes:
estimating whether the definer can define the sale organization or not according to the operation authority of the definer; and
determining a definition authority value A of the sale organization defined by the definer based on the estimating result.

Alternatively, using the processor 501 to determine a definer reference value B of the sale organization defined by the definer and a definer reference value C of the sale channel defined by the definer based on the historical definition data of the definer includes:
acquiring a definition data of the sale organization defined by the definer based on the historical definition data of the definer;
determining a definer reference value B of the sale organization defined by the definer based on the definition data of the sale organization defined by the definer; and
acquiring a definition data of the sale channel defined by the definer based on the historical definition data of the definer; and
determining a definer reference value C of the sale channel defined by the definer based on the definition data of the sale channel defined by the definer.

It should be understood that in the embodiments of the present application, the processor 501 could be a Central Processing Unit (CPU) and/or a Graphic Processing Unit (GPU), Digital Application Processor (DSP), Application Specific Integrated Circuit (ASIC), Field Programmable Gate Array (FPGA), Field Programmable Gate Array (FPGA), Field Programmable Gate Array (FPGA), Field Programmable Gate Array (FPGA) or other programmable logic devices, discrete gate or transistor logic devices, discrete hardware components, and the like.

The input device 502 could include a touchpad, a fingerprint pick sensor (for collecting the fingerprint information of the user and the direction information of the fingerprint), a microphone, a communication module (such as a Wi-Fi module, a 2G/3G/4G network module), a physical key and so on.

The output device 503 could include a display (LCD, etc.), a speaker, or the like. Wherein, the display can be used to display the information input by the user or the information provided to the user. The display could include a display panel, optionally, a display panel could be configured in the form of a liquid crystal display (LCD), an organic light-Emitting Diode (OLED), or the like. Further, the above-described touch panel could be overlaid on the display, the touch panel is sent to the processor 501 to determine the type of touch event when the touchpad detects a touch operation on or near it, and then the processor 501 provides a corresponding visual output on the display according to the type of touch event.

In a particular implementation, the processor 501, the input device 502, the output device 503, and the memory 504 described in the embodiments of the present application could implement an implementation described in an embodiment of a method of data validation provided by an embodiment of the present application, and will not repeat here.

The present application further provides a non-transient computer-readable storage medium is provided, the non-transient computer-readable storage medium is used for storing instructions executable by one or more processors to perform operations, wherein the operations includes:
obtaining package information to be verified and a corresponding definer of the package information;
calculating a deviation degree of the package information according to a predetermined matching algorithm based on an operation authority and a historical definition data of the definer, the deviation degree reflecting the accuracy of the package information defined by the definer;
outputting a prompt message to prompt the definer to verify the package information if the deviation degree is greater than a preset deviation standard value.

Alternatively, calculating a deviation degree of the package information according to a predetermined matching algorithm based on an operation authority and a historical definition data of the definer includes:
obtaining an error coefficient α of the definer;
obtaining a sale organization and a sale channel corresponding to the package information;
determining a definition authority value A of the sale organization defined by the definer according to the operation authority of the definer;
determining a definer reference value B of the sale organization defined by the definer and a definer reference value C of the sale channel defined by the definer based on the historical definition data of the definer; and
substituting the error coefficient α, the definition authority value A, the of the sale organization defined by the definer and the definer reference value C of the sale channel defined by the definer into a predetermined deviation degree calculation formula, and obtaining a deviation degree β of the package information;
wherein the deviation degree calculation formula is: β = (A + B + C) * α.

Alternatively, obtaining an error coefficient α of the definer includes:
counting the number of a historical definer time and the number of package information changing time, and calculating a ratio of the number of a changing time to the number of a historical definer time; and
determining the error coefficient α according to the ratio;
wherein the larger the ratio is, the greater the error coefficient α is.

Alternatively, determining a definition authority value A of the sale organization defined by the definer according to the operation authority of the definer includes:
estimating whether the definer can define the sale organization or not according to the operation authority of the definer; and
determining a definition authority value A of the sale organization defined by the definer based on the estimating result.

Alternatively, determining a definer reference value B of the sale organization defined by the definer and a definer reference value C of the sale channel defined by the definer based on the historical definition data of the definer includes:
acquiring a definition data of the sale organization defined by the definer based on the historical definition data of the definer;
determining a definer reference value B of the sale organization defined by the definer based on the definition data of the sale organization defined by the definer; and
acquiring a definition data of the sale channel defined by the definer based on the historical definition data of the definer; and
determining a definer reference value C of the sale channel defined by the definer based on the definition data of the sale channel defined by the definer.

The embodiments of the application obtain package information to be verified and a corresponding definer of the package information; and calculate a deviation degree of the package information according to a predetermined matching algorithm based on an operation authority and a historical definition data of the definer, so that the accuracy of the package information defined by the definer is obtained; outputting a prompt message to prompt the definer to verify the package information if the deviation degree is greater than a preset deviation standard value, so that a preliminary verification to the package information newly defined by the salesman could be realized, and the salesman is prompted to check the package information according to the verification results, thereby effectively reducing the error rate of package information and the impact of incorrect definer on sales volume.

Those skilled in the art will understand that the illustrated elements and algorithm steps described in the embodiments disclosed herein can be implemented in the form of electronic hardware, or in the form of the combination with computer software and electronic hardware. Whether these functions are implemented in the form of hardware or software depends on the specific application and design constraints of the technical solution. The people skilled in the art could use different methods to implement the described functions for each particular application, but such implementations should not be considered beyond the scope of the present application.

Those skilled in the art will clearly understand that for the convenience and simplicity of description, the specific operation of the device and unit described above could be referred to the corresponding procedure in the foregoing method embodiments and will not be described here.

In the embodiments provided in the present application, it should be understood that the disclosed device could be implemented in other ways. For example, the device described above are merely illustrative, for example, the division of the units is only a logical function division, and other division could be used in the actual implementation, for example, multiple units or components could be combined or integrated into another system, or some features can be ignored, or not performed. In other words, the coupling or direct coupling or communicating connection shown or discussed could be an indirect, or a communicating connection through some interfaces, devices or units, which could be electrical, mechanical, or otherwise.

The units described as separate components could or could not be physically separate, the components shown as units could or could not be physical units, which can be located in one place, or can be distributed to multiple network elements. Parts or all of the elements could be selected according to the actual needs to achieve the object of the present embodiment.

In addition, the functional units and modules in the various embodiments of the present application could be integrated in one processing unit, and can also be an independent unit or an independent module, or two or more units, modules can be integrated in one unit.

The above description is only specific embodiments of the present application, however the scope of the present application is not limited thereto, it will be readily apparent to those skilled in the art that any changes or substitutions within the scope of the application disclosed are intended to be encompassed within the scope of the present application. Accordingly, the scope of the present application is defined by the scope of the appended claims.

## Claims

1. A method for data verification, comprising:
obtaining package information to be verified and a corresponding definer of the package information;
calculating a deviation degree of the package information according to a predetermined matching algorithm, based on an operation authority and a historical definition data of the definer, wherein the deviation degree reflects an accuracy of the package information defined by the definer; and
outputting a prompt message to prompt the definer to verify the package information if the deviation degree is greater than a preset deviation standard value.

2. The method for data verification according to claim 1, wherein, the calculating a deviation degree of the package information according to a predetermined matching algorithm based on an operation authority and a historical definition data of the definer comprises:
obtaining an error coefficient α of the definer;
obtaining a sale organization and a sale channel corresponding to the package information;
determining a definition authority value A of the sale organization defined by the definer according to the operation authority of the definer;
determining a definer reference value B of the sale organization defined by the definer and a definer reference value C of the sale channel defined by the definer based on the historical definition data of the definer; and
substituting the error coefficient α, the definition authority value A, the of the sale organization defined by the definer and the definer reference value C of the sale channel defined by the definer in a predetermined deviation degree calculation formula, obtaining a deviation degree β of the package information;
wherein the deviation degree calculation formula is: β = (A + B + C) * α.

3. The method for data verification according to claim 2, wherein, the obtaining an error coefficient α of the definer comprises:
counting the number of a historical definer time and the number of package information changing time, and calculating a ratio of the number of a changing time to the number of a historical definer time; and
determining the error coefficient α according to the ratio;
wherein the larger the ratio is, the greater the error coefficient α is.

4. The method for data verification according to claim 2, wherein, the determining a definition authority value A of the sale organization defined by the definer according to the operation authority of the definer comprises:
estimating whether the definer can define the sale organization or not according to the operation authority of the definer; and
determining a definition authority value A of the sale organization defined by the definer based on the estimating result.

5. The method for data verification according to claim 2, wherein, the determining a definer reference value B of the sale organization defined by the definer and a definer reference value C of the sale channel defined by the definer based on the historical definition data of the definer includes:
acquiring a definition data of the sale organization defined by the definer based on the historical definition data of the definer;
determining a definer reference value B of the sale organization defined by the definer based on the definition data of the sale organization defined by the definer;
acquiring a definition data of the sale channel defined by the definer based on the historical definition data of the definer; and
determining a definer reference value C of the sale channel defined by the definer based on the definition data of the sale channel defined by the definer.

6. A prompting device for data verification, comprising:
an obtaining module configured for obtaining package information to be verified and a corresponding definer of the package information;
a calculating module configured for calculating a deviation degree of the package information according to a predetermined matching algorithm based on an operation authority and a historical definition data of the definer, wherein the deviation degree reflects an accuracy of the package information defined by the definer; and
a prompting module configured for outputting a prompt message to prompt the definer to verify the package information if the deviation degree is greater than a preset deviation standard value, and
outputting a prompt message to prompt the definer to verify the package information if the deviation degree is greater than a preset deviation standard value.

7. The prompting device for data verification according to claim 6, wherein, the calculating module comprises:
a first obtaining unit configured for obtaining an error coefficient α of the definer;
a second obtaining unit configured for obtaining a sale organization and a sale channel corresponding to the package information;
a first processing unit configured for determining a definition authority value A of the sale organization defined by the definer according to the operation authority of the definer;
a second processing unit configured for determining a definer reference value B of the sale organization defined by the definer and a definer reference value C of the sale channel defined by the definer based on the historical definition data of the definer; and
a calculating unit configured for substituting the error coefficient α, the definition authority value A, the of the sale organization defined by the definer and the definer reference value C of the sale channel defined by the definer into a predetermined deviation degree calculation formula, and obtaining a deviation degree β of the package information;
wherein the deviation degree calculation formula is: β = (A + B + C) * α.

8. The prompting device for data verification according to claim 7, wherein, the first obtaining unit is configured for:
counting the number of a historical definer time and the number of package information changing time, and calculating a ratio of the number of a changing time to the number of a historical definer time; determining the error coefficient α according to the ratio;
wherein the larger the ratio is, the greater the error coefficient α is.

9. The prompting device for data verification according to claim 7, wherein the first processing unit is configured for:
estimating whether the definer can define the sale organization or not according to the operation authority of the definer; determining a definition authority value A of the sale organization defined by the definer based on the estimating result.

10. The prompting device for data verification according to claim 7, wherein the second processing unit is configured for:
acquiring a definition data of the sale organization defined by the definer based on the historical definition data of the definer;
determining a definer reference value B of the sale organization defined by the definer based on the definition data of the sale organization defined by the definer;
acquiring a definition data of the sale channel defined by the definer based on the historical definition data of the definer; and
determining a definer reference value C of the sale channel defined by the definer based on the definition data of the sale channel defined by the definer.

11. A terminal, the terminal comprises a processor, a memory, an input device, and an output device; wherein the input device is configured for enabling a user to input package information to be verified, obtaining package information to be verified, and a corresponding definer of the package information;
the memory is configured for storing program code;
the processor is configured for executing program code stored in the memory to perform the following operations:
obtaining package information to be verified and a corresponding definer of the package information;
calculating a deviation degree of the package information according to a predetermined matching algorithm based on an operation authority and a historical definition data of the definer, wherein the deviation degree reflects the accuracy of the package information defined by the definer; and
outputting a prompt message to prompt the definer to verify the package information if the deviation degree is greater than a preset deviation standard value.
wherein the output device is used for outputting the prompt information.

12. The terminal according to claim 11, wherein the calculating a deviation degree of the package information according to a predetermined matching algorithm based on an operation authority and a historical definition data of the definer comprises:
obtaining an error coefficient α of the definer;
obtaining a sale organization and a sale channel corresponding to the package information;
determining a definition authority value A of the sale organization defined by the definer according to the operation authority of the definer;
determining a definer reference value B of the sale organization defined by the definer and a definer reference value C of the sale channel defined by the definer based on the historical definition data of the definer; and
substituting the error coefficient α, the definition authority value A, the of the sale organization defined by the definer and the definer reference value C of the sale channel defined by the definer into a predetermined deviation degree calculation formula, and obtaining a deviation degree β of the package information;
wherein the deviation degree calculation formula is: β = (A + B + C) * α.

13. The terminal according to claim 12, wherein the obtaining an error coefficient α of the definer comprises:
counting the number of a historical definer time and the number of package information changing time, and calculating a ratio of the number of a changing time to the number of a historical definer time; and
determining the error coefficient α according to the ratio;
wherein the larger the ratio is, the greater the error coefficient α is.

14. The terminal according to claim 12, wherein the determining a definition authority value A of the sale organization defined by the definer according to the operation authority of the definer comprises:
estimating whether the definer can define the sale organization or not according to the operation authority of the definer; and
determining a definition authority value A of the sale organization defined by the definer based on the estimating result.

15. The terminal according to claim 12, wherein the determining a definer reference value B of the sale organization defined by the definer and a definer reference value C of the sale channel defined by the definer based on the historical definition data of the definer comprises:
acquiring a definition data of the sale organization defined by the definer based on the historical definition data of the definer;
determining a definer reference value B of the sale organization defined by the definer based on the definition data of the sale organization defined by the definer;
acquiring a definition data of the sale channel defined by the definer based on the historical definition data of the definer; and
determining a definer reference value C of the sale channel defined by the definer based on the definition data of the sale channel defined by the definer.

16. A non-transient computer-readable storage medium, wherein the non-transient computer-readable storage medium is configured for storing instructions executable by one or more processors to perform the following operations:
obtaining package information to be verified and a corresponding definer of the package information;
calculating a deviation degree of the package information according to a predetermined matching algorithm based on an operation authority and a historical definition data of the definer, the deviation degree reflects an accuracy of the package information defined by the definer;
outputting a prompt message to prompt the definer to verify the package information if the deviation degree is greater than a preset deviation standard value.

17. The non-transient computer-readable storage medium according to claim 16, wherein the calculating a deviation degree of the package information according to a predetermined matching algorithm based on an operation authority and a historical definition data of the definer includes:
obtaining an error coefficient α of the definer;
obtaining a sale organization and a sale channel corresponding to the package information;
determining a definition authority value A of the sale organization defined by the definer according to the operation authority of the definer;
determining a definer reference value B of the sale organization defined by the definer and a definer reference value C of the sale channel defined by the definer based on the historical definition data of the definer; and
substituting the error coefficient α, the definition authority value A, the of the sale organization defined by the definer and the definer reference value C of the sale channel defined by the definer into a predetermined deviation degree calculation formula, and obtaining a deviation degree β of the package information;
wherein the deviation degree calculation formula is: β = (A + B + C) * α.

18. The non-transient computer-readable storage medium according to claim 17, wherein the obtaining an error coefficient α of the definer includes:
counting the number of a historical definer time and the number of a package information changing time, and calculating a ratio of the number of a changing time to the number of a historical definer time; and
determining the error coefficient α according to the ratio;
wherein the larger the ratio is, the greater the error coefficient α is.

19. The non-transient computer-readable storage medium according to claim 17, wherein the determining a definition authority value A of the sale organization defined by the definer according to the operation authority of the definer comprises:
estimating whether the definer can define the sale organization or not according to the operation authority of the definer; and
determining a definition authority value A of the sale organization defined by the definer based on the estimating result.

20. The non-transient computer-readable storage medium according to claim 17, wherein the determining a definer reference value B of the sale organization defined by the definer and a definer reference value C of the sale channel defined by the definer based on the historical definition data of the definer includes:
acquiring a definition data of the sale organization defined by the definer based on the historical definition data of the definer;
determining a definer reference value B of the sale organization defined by the definer based on the definition data of the sale organization defined by the definer;
acquiring a definition data of the sale channel defined by the definer based on the historical definition data of the definer; and
determining a definer reference value C of the sale channel defined by the definer based on the definition data of the sale channel defined by the definer.
